# EUROPEAN PATENT SPECIFICATION

(11) **EP 0 718 125 B1**
(45) Date of publication and mention of the grant of the patent: **27.02.2002**
(21) Application number: 95309147.7
(22) Date of filing: 15.12.1995
(51) Int. Cl.: B60C 11/12

(54) **Pneumatic tires suitable for running on snow and ice roads**
Luftreifen für verschneite und vereiste Böden
Bandages pneumatiques pour roulage sur routes enneigées et verglacées

(30) Priority: 16.12.1994 JP 31357294
(43) Date of publication of application: 26.06.1996
(73) Proprietor: Bridgestone Corporation, Tokyo (JP)
(72) Inventor: Himoru, Yasuo, Tahcikawa City, Tokyo (JP)
(74) Representative: Whalley, Kevin

(56) References cited:
- GB-A- 867 556
- PATENT ABSTRACTS OF JAPAN vol. 017 no. 172 (M-1392) ,2 April 1993 & JP-A-04 331608 (YOKOHAMA RUBBER CO LTD:THE) 19 November 1992,
- PATENT ABSTRACTS OF JAPAN vol. 015 no. 443 (M-1178) ,12 November 1991 & JP-A-03 189213 (YOKOHAMA RUBBER CO LTD:THE) 19 August 1991,
- PATENT ABSTRACTS OF JAPAN vol. 012 no. 169 (M-699) ,20 May 1988 & JP-A-62 283001 (BRIDGESTONE CORP) 8 December 1987,
- PATENT ABSTRACTS OF JAPAN vol. 017 no. 623 (M-1511) ,17 November 1993 & JP-A-05 193309 (OHTSU TIRE & RUBBER CO LTD:THE) 3 August 1993,

## Description

This invention relates to pneumatic tires suitable for running on snow and ice roads, and more particularly to a pneumatic tire having improved running performance on ice roads.

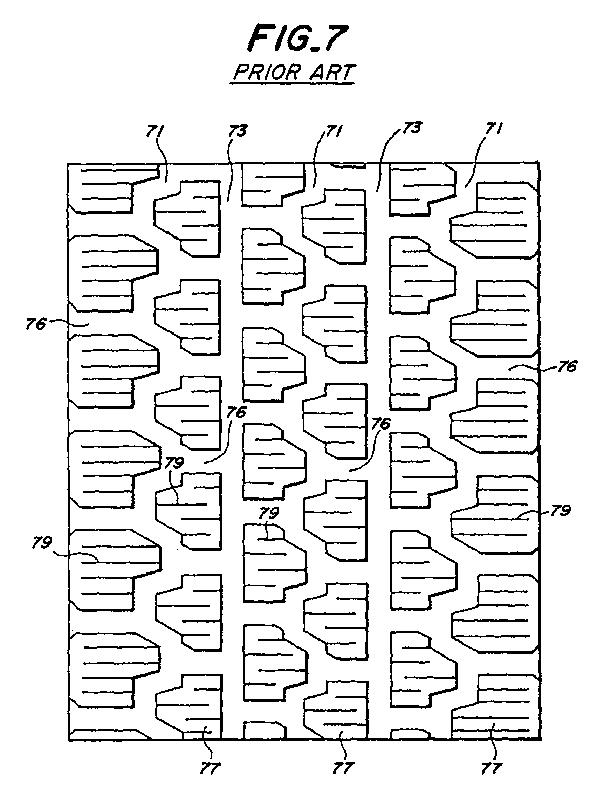

A typical tread pattern applied to a conventional pneumatic tire for running on snow and ice roads is shown in Fig. 7 of the accompanying drawings.

As shown in Fig. 7, the conventional pneumatic tire suitable for running on snow and ice roads has a tread pattern wherein zigzag grooves 71 and straight grooves 73 continuously extending in the circumferential direction of the tire are alternately arranged in the widthwise direction of the tire, lateral grooves 76 connecting these circumferential grooves to each other are arranged at given intervals in the circumferential direction, plural block rows 77 are defined by these circumferential grooves 71, 73 and lateral grooves 76, a plurality of sipes 79 are formed in each block so as to be substantially in parallel with each other, and a negative ratio is within a range of 35-45%; such a tire has generally satisfactory running performances on snow and ice roads.

However, it is strongly demanded to develop tires capable of improved performances on ice roads and in particular improved cornering and braking performances as compared with the conventional tire, because the friction coefficient on frozen road surfaces has become generally lower with abnormally mild winters in recent years.

In order to improve the performances on ice roads, the ground contact area (positive area) may be increased to enhance the friction force, or the number of sipes (density) may be increased to increase edge components and hence enhance the gripping effect. Furthermore, it has been confirmed that it is particularly important to remove any water film flowing into the ground contact region on an ice road at about 0°C. For this purpose, it is effective to increase the sipe density. However, if the sipe density is too large, the block rigidity lowers and consequently uneven wear is caused and at the same time the ground contact area is reduced by the bending deformation of the block to lower the performances on ice roads.

In the tread of a tire for running on snow and ice roads there is frequently used a foam rubber as disclosed in JP-A-62-283001. Since the foam rubber is soft as compared with the ordinary tread rubber, when the sipes are arranged at a high density in the tread using the foam rubber, it is important to ensure sufficient block rigidity.

Attention is also drawn to the disclosure of JP-A-4-331608.

It is an object of the invention to provide a tread pattern developing improved running performances on snow and ice roads, particularly running performances on ice roads.

It is another object of the invention to provide a pneumatic tire having a tread pattern suitable for running on snow and ice roads in a tread made from relatively soft rubber such as foam rubber as mentioned above.

According to the present invention, there is provided a pneumatic tire having a tread pattern of blocks defined by circumferential grooves and lateral grooves and provided with a plurality of sipes formed in each block, wherein each of the blocks is divided into a central region and side regions in a widthwise direction of the block, and wherein a plurality of microblocks are formed in the central region of the block by the said sipes, and wherein the width of the central region in the widthwise direction of the block is 0.20 -0.70 times the width of the block in the widthwise direction, and wherein the sipe density in the central region is approximately 1.2-2.0 times the sipe density in the side region.

In a preferred embodiment of the invention, sipes disposed in both side regions of each block have substantially a wavy form.

In another preferred embodiment of the invention, an end portion of the block facing the lateral groove is substantially continuous along the lateral groove.

The invention will be further described with reference to the accompanying drawings, wherein:
Fig. 1 is a developed plan view of a first embodiment of a tread pattern of a tire according to the invention;
Fig. 2 is a developed plan view of a second embodiment of a tread pattern of a tire according to the invention;
Fig. 3 is a developed plan view of a third embodiment of a tread pattern of a tire according to the invention;
Fig. 4 is a developed plan view of a fourth embodiment of a tread pattern of a tire according to the invention;
Fig. 5 is a developed plan view of a fifth embodiment of a tread pattern of a tire according to the invention;
Fig. 6 is a developed plan view of a sixth embodiment of a tread pattern of a tire according to the invention; and
Fig. 7 is a developed plan view of a conventional tread pattern.

In the pneumatic tire according to the invention, the central region of each block is finely divided into a plurality of microblocks by sipes, so that the arrangement of sipes is balanced and hence the effect of cutting water film flowing out on the road surface is developed in addition to the gripping effect of the sipe edges.

When one independent block contacts with the surface of an ice road, water film existing in the block is discharged from the block through sipes opening into the main groove, but there is a tendency that water is insufficiently discharged from the central region of the block which is located furthest from the main groove. Furthermore, the central region of the block is subject to high surface pressure and is apt to generate water film, so that the water discharge from the central region largely affects the braking performance and traction performance. In the invention, many sipes are crossed in the central region of the block in form of rectangles to increase the sipe density, whereby the effect of discharging water can be improved. A rectangle may include quadrilateral, lozenge, honeycomb, triangle and the like.

If sipes are densely disposed over the whole surface of the block, the edge effect and water discharging effect are improved, but the block rigidity undesirably lowers and hence the effective ground contact area is lowered by the deformation of the block to degrade the running performances on an ice road such as braking performance and the like. According to the invention, the sipes are densely arranged only in the central region of the block, so that there is attained the removal of water film on an ice surface while ensuring sufficient block rigidity. Moreover, the shape of the microblock is rectangular, so that a circumferential component is given to the sipes existing in the central region of the block, whereby the water discharge effect is enhanced and the front and rear rigidities of the block in the circumferential direction are ensured.

When the ratio of width S of the central region in the widthwise direction to width T of the block in the widthwise direction is less than 0.20, the water discharge effect is lost, while when the ratio S/T exceeds 0.70, the block rigidity considerably lowers. Therefore, the ratio S/T is limited to a range of 0.20-0.70.

The sipes arranged in both side regions of each block preferably have substantially a wavy form, so that the edge effect can be further improved.

When the sipe density in the central region of the block is less than 1.2 times the sipe density in the side region, the water discharge effect is insufficient, while when the sipe density in the central region exceeds 2.0 times the sipe density in the side region, the desired block rigidity is not obtained. Therefore, the sipe density in the central region is 1.2-2.0 times the sipe density in the side region.

Furthermore, the end portion of the block facing the lateral groove is preferably substantially continuous along the lateral groove, so that the block rigidity in the circumferential direction can be ensured.

Moreover, at least a part of opposed sides of adjoining blocks in the circumferential direction are preferably arranged to contact each other in a ground contact region during the running of the tire under loading, so that the block rigidity can be ensured to avoid decrease of ground contact area due to large deformation of the block.

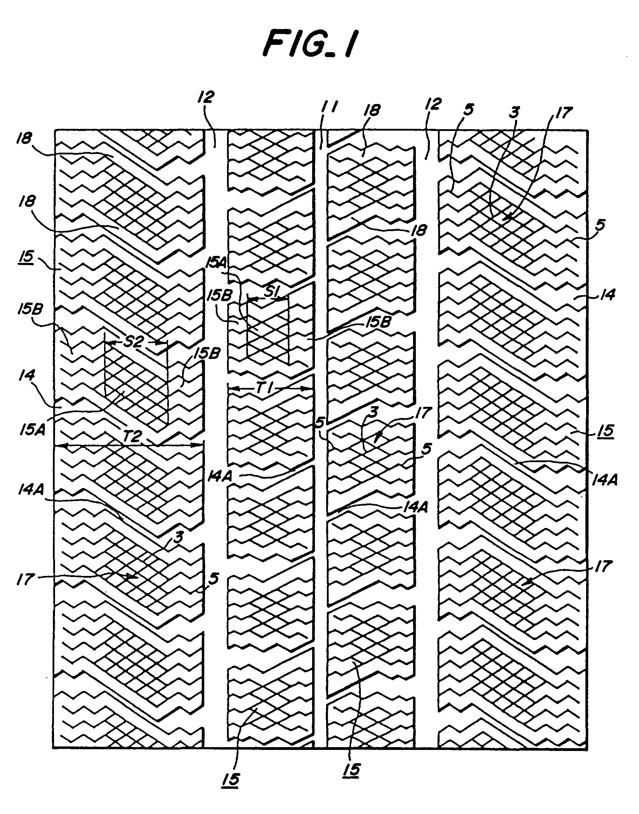

In Figs. 1-6 are shown first to sixth embodiments of the tread pattern in pneumatic tire according to the invention. These tires have a tire size of 185/70R14, a tread width of about 148 m and a negative ratio of 28%. Moreover, the width of the sipes formed in the blocks is 0.5 mm.

In the first embodiment of the tread pattern shown in Fig. 1, many blocks 15 are defined by circumferential grooves 11 and 12 and lateral grooves 14. In this case, the width of the circumferential groove 11 is 4 mm, the width of the circumferential groove 12 is 7 mm, and the width of the lateral groove 14 is 5 mm. The lateral groove 14 is provided with a narrow-width portion 14A having such a width that the opposed groove walls are closed to each other in the ground contact region so that at least a part of opposed sides of the adjoining blocks in the circumferential direction contact each other during the running of the tire under loading. In the first embodiment, the width of the narrow-width portion 14A is 2 mm.

In the pneumatic tire running on snow and ice roads, a foam rubber having a low hardness is frequently used in the tire tread and plural sipes are arranged in each block formed on such a tread. As a result, the rigidity in the tire tread is insufficient and there may be caused a phenomenon that each block of the tread rubber buckles under loading. In order to prevent this phenomenon, it is necessary to ensure sufficient rigidity in the central zone of the tread having a high ground contact pressure. In the illustrated embodiment according to the invention, the tread rigidity in the circumferential direction is sufficiently ensured by the contact of opposed groove walls of the narrow-width portion 14A.

When the block 15 is divided into a central region 15A and both side regions 15B in the widthwise direction of the block, the central region 15A of the block 15 is finely divided into a plurality of rectangular microblocks 17 by many sipes 3, while sipes 5 extending substantially in the lateral direction are disposed in each of the side regions 15B. The sipe density in the central region of the block is 1.8 times that in the side region thereof. The term "sipe density" used herein means a value obtained by dividing a sum of circumferential components (length) and axial components (length) of the sipes by an area of each of the central and side regions. In the central region 15A of the block 15 are disposed the sipes 3 so as to include a relatively great amount of the circumferential component, while the sipes 5 are disposed in zigzag or wave form in both side regions 15B of the block. Symbols T1 and T2 are widths of the block 15 in the widthwise direction, and symbols S1 and S2 are widths of the central region 15A of the block 15 in the widthwise direction. In the first embodiment, S1 and S2 are 11 mm and 8 mm, respectively, and T1 and T2 are 24 mm and 41 mm, respectively. Therefore, the ratio S1/T1 is about 0.46 and the ratio S2/T2 is about 0.44. Numeral 18 is an end portion of the block 15 facing a lateral groove and substantially continuous along the lateral groove. That is, the sipe is not opened to the lateral groove at this end portion 18.

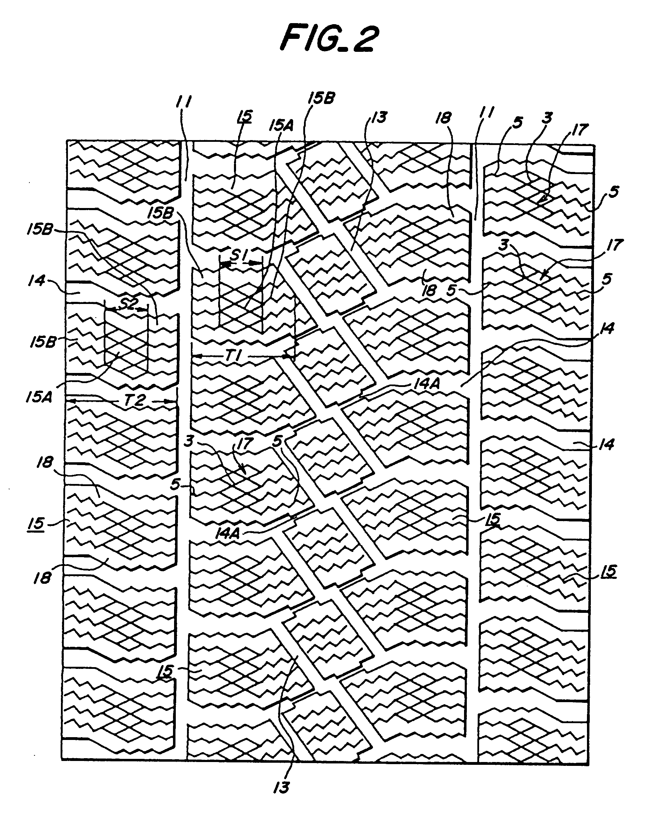

In the second embodiment of the tread pattern shown in Fig. 2, many blocks 15 are defined by circumferential grooves 11, slant grooves 13 and lateral grooves 14. In this case, the widths of the circumferential groove 11, slant groove 13 and lateral groove 14 are 4 mm, 4 mm and 6 mm, respectively. Furthermore, the lateral groove 14 is provided with a narrow-width portion 14A having such a width that the opposed groove walls are closed to each other in the ground contact region so that at least a part of opposed sides of the adjoining blocks in the circumferential direction contact each other during the running of the tire under loading (i.e. 1.2 mm).

The central region 15A of the block 15 is finely divided into a plurality of lozenged microblocks 17 by many sipes 3, while zigzag sipes 5 extending substantially in the lateral direction are disposed in each of the side regions 15B. Moreover, S1 and S2 of the central region of the block are 12 mm and 11 mm, respectively, and T1 and T2 of the block are 35 mm and 31 mm, respectively. Therefore, the ratio S1/T1 is about 0.34 and the ratio S2/T2 is about 0.35.

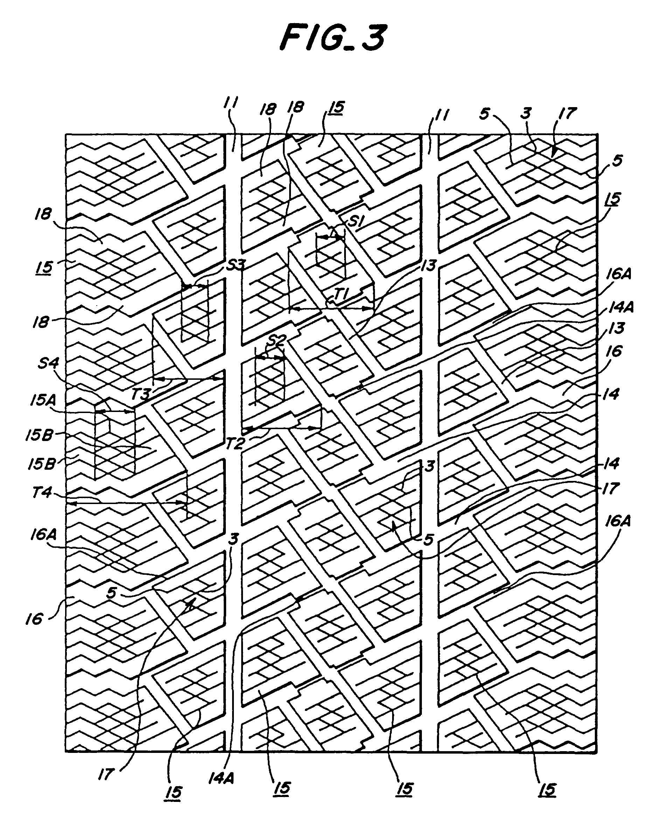

In the third embodiment of the tread pattern shown in Fig. 3, many blocks 15 are defined by circumferential grooves 11, slant grooves 13 and lateral grooves 14, 16. In this case, the widths of the circumferential groove 11, slant groove 13 and lateral grooves 14, 16 are 5 mm, 3 mm, 4.5 mm and 5 mm, respectively. Furthermore, the lateral grooves 14, 16 are provided with narrow-width portions 14A and 16A having such a width that the opposed groove walls are closed to each other in the ground contact region so that at least a part of opposed sides of the adjoining blocks in the circumferential direction contact each other during the running of the tire under loading (i.e. 1.2 mm).

The central region 15A of the block 15 is finely divided into a plurality of rectangular microblocks 17 by many sipes 3, while straight sipes 5 extending substantially in the lateral direction are disposed in each of the side regions 15B. The sipe density of the central region of the block is larger than that of the side region thereof. In the side regions of the block, ends of the respective sipes 5 are alternately opened to the respective groove in the circumferential direction of the tread, whereby the block rigidity in both side regions is ensured.

Moreover, S1, S2, S3 and S4 of the central region of the block are 8 mm, 8 mm, 8 mm and 11 mm, respectively, and T1, T2, T3 and T4 of the block are 24 mm, 23 mm, 20 mm and 34 mm, respectively. Therefore, the ratio S1/T1 is about 0.33, the ratio S2/T2 is about 0.35, the ratio S3/T3 is about 0.40 and the ratio S4/T4 is about 0.32.

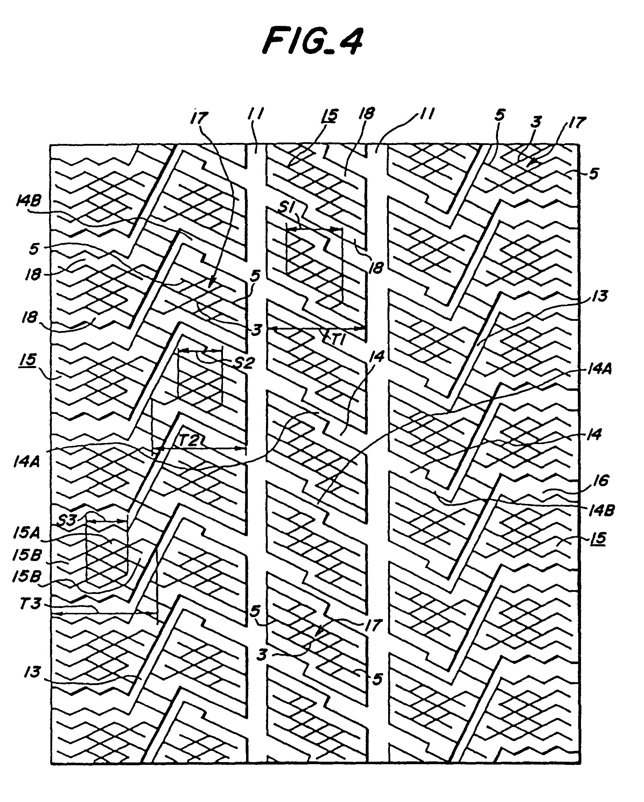

In the fourth embodiment of the tread pattern shown in Fig. 4, many blocks 15 are defined by circumferential grooves 11, slant grooves 13 and lateral grooves 14, 16. In this case, the widths of the circumferential groove 11, slant groove 13 and lateral grooves 14, 16 are 6 mm, 2.5 mm, 5.5 mm and 5.5 mm, respectively. Furthermore, the lateral groove 14 is provided with narrow-width portions 14A and 14B having such a width that the opposed groove walls are closed to each other in the ground contact region so that at least a part of opposed sides of the adjoining blocks in the circumferential direction contact each other during the running of the tire under loading. The widths of the narrow-width portions 14A and 14B are 2 mm and 3 mm, respectively.

The central region 15A of the block 15 is finely divided into a plurality of lozenged microblocks 17 by many sipes 3, while straight sipes 5 extending substantially in the lateral direction are disposed in each of the side regions 15B. Moreover, S1, S2 and S3 of the central region of the block are 15 mm, 12 mm and 12 mm, respectively, and T1, T2 and T3 of the block are 28 mm, 26 mm and 30 mm, respectively. Therefore, the ratio S1/T1 is about 0.54, the ratio S2/T2 is about 0.46 and the ratio S3/T3 is about 0.40.

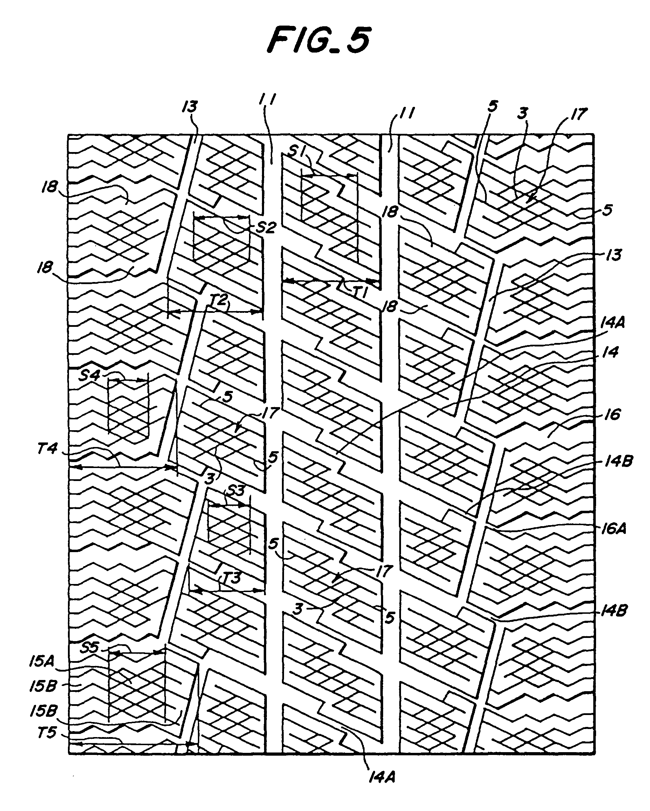

In the fifth embodiment of the tread pattern shown in Fig. 5, many blocks 15 are defined by circumferential grooves 11, slant grooves 13 and lateral grooves 14, 16. In this case, the widths of the circumferential groove 11, slant groove 13 and lateral grooves 14, 16 are 5 mm, 3 mm, 5 mm and 5 mm, respectively. Furthermore, the lateral grooves 14, 16 are provided with narrow-width portions 14A, 14B and 16A having such a width that the opposed groove walls are closed to each other in the ground contact region so that at least a part of opposed sides of the adjoining blocks in the circumferential direction contact each other during the running of the tire under loading. The widths of the narrow-width portions 14A, 14B and 16A are 2 mm, 2 mm and 2 mm, respectively.

The central region 15A of the block 15 is finely divided into a plurality of lozenged microblocks 17 by many sipes 3, while straight sipes 5 extending substantially in the lateral direction are disposed in each of the side regions 15B. Moreover, S1, S2, S3, S4 and S5 of the central region of the block are 15 mm, 16 mm, 12 mm, 12 mm and 16 mm, respectively, and T1, T2, T3, T4 and T5 of the block are 28 mm, 27 mm, 21 mm, 30 mm and 36 mm, respectively. Therefore, the ratio S1/T1 is about 0.54, the ratio S2/T2 is about 0.59, the ratio S3/T3 is about 0.57, the ratio S4/T4 is about 0.40 and the ratio S5/T5 is about 0.44.

Moreover, the end portion 18 of the block 15 is substantially continuous along the lateral groove 14.

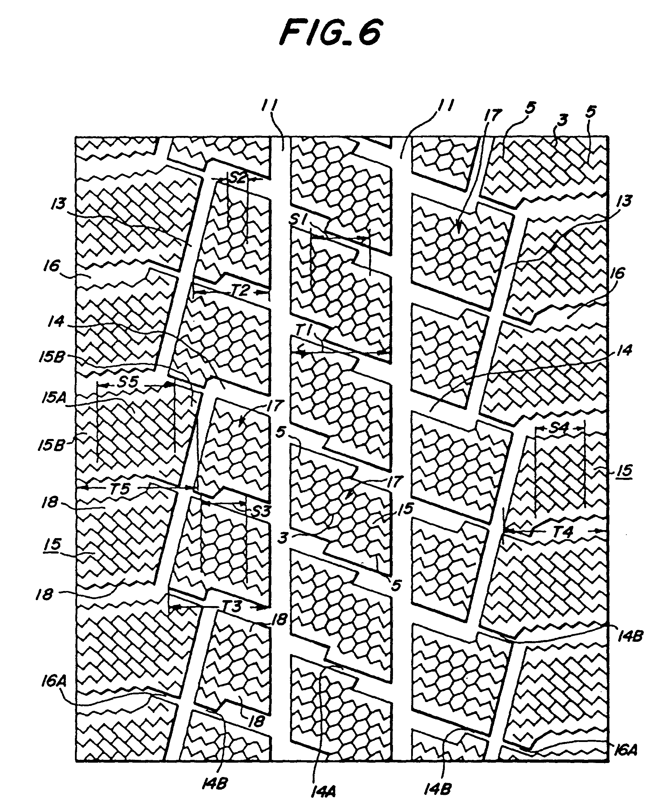

In the sixth embodiment of the tread pattern shown in Fig. 6, many blocks 15 are defined by circumferential grooves 11, slant grooves 13 and lateral grooves 14, 16. In this case, the widths of the circumferential groove 11, slant groove 13 and lateral grooves 14, 16 are 6 mm, 4 mm, 6 mm and 6 mm, respectively. Furthermore, the lateral grooves 14, 16 are provided with narrow-width portions 14A, 14B and 16A having such a width that the opposed groove walls are closed to each other in the ground contact region so that at least a part of opposed sides of the adjoining blocks in the circumferential direction contact each other during the running of the tire under loading. The widths of the narrow-width portions 14A, 14B and 16A are 2 mm, 2 mm and 2 mm, respectively.

The central region 15A of the block 15 is finely divided into a plurality of honeycomb microblocks 17 by many sipes 3, while zigzag sipes 5 extending substantially in the lateral direction are disposed in each of the side regions 15B. The sipe density in the central region is approximately 1.4 times that in the side region thereof. Moreover, S1, S2, S3, S4 and S5 of the central region of the block are 16 mm, 5 mm, 12 mm, 13 mm and 21 mm, respectively, and T1, T2, T3, T4 and T5 of the block are 28 mm, 21 mm, 28 mm, 28 mm and 35 mm, respectively. Therefore, the ratio S1/T1 is about 0.57, the ratio S2/T2 is about 0.23, the ratio S3/T3 is about 0.43, the ratio S4/T4 is about 0.46 and the ratio S5/T5 is about 0.60.

Moreover, the end portion 18 of the block 15 is substantially continuous along the lateral groove 14.

Then, tests for the evaluation of braking performance on ice, traction performance on ice and cornering performance on ice are made with respect to pneumatic tires for passenger cars of Examples 1-6 shown in Figs. 1-6 and a conventional example shown in Fig. 7 to obtain results as shown in Table 1.

The conventional tire shown in Fig. 7 has the same tire size as in Example 1 and a negative ratio of 35%, in which the width of the circumferential zigzag groove 71 is 5-7 mm, the width of the circumferential straight groove 73 is 4 mm, the width of the lateral groove 76 is 6 mm, and the width of the sipe is 0.7 mm.

The tire to be tested is inflated under an internal pressure of 2.0 kgf/cm² and actually run on an ice road. That is, the cornering performance on ice is evaluated by a time required for circular running at a radius of 20 m on an icebound surface, and the braking performance on ice is evaluated by a stopping distance through full braking at a state of running on an icebound surface at a speed of 20 km/h, and the traction performance on ice is evaluated by a time required for running over a distance of 100 m through full acceleration from a speed of 20 km/h on an icebound surface.

Each of the evaluation results is represented by an index on the basis that the conventional example is 100. The larger the index value, the better the performance.

**Table 1**

| | Cornering performance on ice | Braking performance on ice | Traction performance on ice |
|---|---|---|---|
| Conventional Example | 100 | 100 | 100 |
| Example 1 | 110 | 130 | 125 |
| Example 2 | 105 | 130 | 130 |
| Example 3 | 115 | 120 | 120 |
| Example 4 | 120 | 125 | 115 |
| Example 5 | 120 | 125 | 120 |
| Example 6 | 125 | 125 | 115 |

As seen from the results of Table 1, all of the pneumatic tires for passenger cars of Examples 1-6 have considerably improved running performances on ice as compared with the conventional pneumatic tire.

As mentioned above, the central region of each block in the pneumatic tire according to the invention is finely divided into a plurality of rectangular microblocks by many sipes, so that the structure of the tread pattern is simple and also the effect of removing water film flowing onto a ground contact region is developed in addition to the gripping effect of the sipe edge and the block rigidity is ensured. Therefore, this tire is suitable for running on snow and ice roads, particularly running on ice roads. Moreover, the microblocks have a rectangular shape, so that the central region of the block has a sufficient rigidity in the circumferential direction.

Furthermore, the ratio of width of the central region of the block to width of the block in the widthwise direction is restricted to a range of 0.20-0.70, so that the effect of discharging water is developed while maintaining sufficient block rigidity. Since the sipes disposed in both side regions of the block preferably have substantially a wavy form, a high edge effect is developed. Also, the sipe density in the central region is 1.2-2.0 times the sipe density in the side region, so that effective siping is carried out in the blocks.

## Claims

1. A pneumatic tire having a tread pattern of blocks (15) defined by circumferential grooves (11,12) and lateral grooves (14,16) and provided with a plurality of sipes (3,5) formed in each block, wherein each of the blocks (15) is divided into a central region (15A) and side regions (15B) in a widthwise direction of the block, and wherein a plurality of microblocks (17) are formed in the central region (15A) of the block by the said sipes (3), and wherein the width (S) of the central region (15A) in the widthwise direction of the block (15) is 0.20 -0.70 times the width (T) of the block in the widthwise direction, and wherein the sipe density in the central region (15A) is approximately 1.2-2.0 times the sipe density in the side region (15B).

2. A pneumatic tire as claimed in claim 1, **characterized in that** sipes (5) disposed in both side regions (15B) of each block (15) have substantially a wavy form.

3. A pneumatic tire as claimed in claim 1 or 2, **characterized in that** an end portion (18) of the block (15) facing the lateral groove (14) is substantially continuous along the lateral groove.

4. A pneumatic tire as claimed in any of claims 1 to 3, **characterized in that** said lateral grooves (14,16) vary in groove width and include a narrow width portion (14A,16A) between said circumferential grooves.

5. A pneumatic tire as claimed in any of claims 1 to 4, **characterized in that** all of said blocks (15) in said tread pattern are divided into microblocks (17).

6. A pneumatic tire as claimed in any of claims 1 to 5, **characterized in that** said microblocks (17) comprise a repeating regular geometric pattern.

7. A pneumatic tire as claimed in any of claims 1 to 6, **characterized by** further comprising slant grooves (13) joining lateral grooves (14) in a region of said tread pattern between said circumferential grooves (11).

8. A pneumatic tire as claimed in claim 7, **characterized by** further comprising slant grooves (13) joining lateral grooves (14) in a region of said tread pattern laterally outside each of said circumferential grooves (11).

9. A pneumatic tire as claimed in any of claims 1 to 8, **characterized by** further comprising slant grooves (13) joining lateral grooves (14) in regions of said tread pattern laterally outside each of said circumferential grooves (11), said slant grooves (13) further defining blocks (15) having microblocks (17).

10. A pneumatic tire as claimed in claim 9, **characterized by** further comprising narrow width portions (14B) of said lateral grooves (14) coupled to said slant grooves (13).

11. A pneumatic tire as claimed in any of claims 1 to 10, **characterized in that** said microblocks (17) comprise two different regular patterns.

## Patentansprüche

1. Luftreifen, der ein Laufflächenmuster aus Blöcken (15) hat, die durch Umfangsrillen (11, 12) und seitliche Rillen (14, 16) definiert sind, und mit einer Vielzahl von in jedem Block gebildeten Einschnitten (3, 5) versehen sind, wobei jeder der Blöcke (15) in der Breitenrichtung des Blocks in ein mittleres Gebiet (15A) und Seitengebiete (15B) geteilt ist, und wobei durch die Einschnitte (3) eine Vielzahl von Mikroblöcken (17) in dem mittleren Gebiet (15A) des Blocks gebildet ist, und wobei die Breite (S) des mittleren Gebietes (15A) in der Breitenrichtung des Blocks (15) gleich der 0,20-0,70-fachen Breite (T) des Blocks ist in der Breitenrichtung, und wobei die Einschnittdichte in dem mittleren Gebiet (15A) ungefähr gleich der 1,2-2,0-fachen Einschnittdichte in dem Seitengebiet (15B) ist.

2. Luftreifen wie in Anspruch 1 beansprucht, **dadurch gekennzeichnet, daß** die in den beiden Seitengebieten (15B) jedes Blocks (15) angeordneten Einschnitte (5) im wesentlichen eine wellige Form haben.

3. Luftreifen wie in Anspruch 1 oder 2 beansprucht, **dadurch gekennzeichnet, daß** ein der seitlichen Rille (14) gegenüberliegender Endbereich (18) des Blocks (15) im wesentlichen kontinuierlich längs der seitlichen Rille ist.

4. Luftreifen wie in irgendeinem der Ansprüche 1 bis 3 beansprucht, **dadurch gekennzeichnet, daß** die seitlichen Rillen (14, 16) eine variierende Rillenbreite haben, und einen schmalen Breitenbereich (14A, 16A) zwischen den Umfangsrillen umfassen.

5. Luftreifen wie in irgendeinem der Ansprüche 1 bis 4 beansprucht, **dadurch gekennzeichnet, daß** bei dem Laufflächenmuster alle Blöcke (15) in Mikroblöcke (17) geteilt sind.

6. Luftreifen wie in irgendeinem der Ansprüche 1 bis 5 beansprucht, **dadurch gekennzeichnet, daß** die Mikroblöcke (17) ein sich wiederholendes regelmäßiges geometrisches Muster aufweisen.

7. Luftreifen wie in irgendeinem der Ansprüche 1 bis 6 beansprucht, **dadurch gekennzeichnet, daß** er weiterhin in einem zwischen den Umfangsrillen (11) liegenden Gebiet des Laufflächenmusters schräge Rillen (13) aufweist, die seitliche Rillen (14) verbinden.

8. Luftreifen wie in Anspruch 7 beansprucht, **dadurch gekennzeichnet, daß** er weiterhin in einem seitlich außerhalb von jeder der Umfangsrillen (11) liegenden Gebiet des Laufflächenmusters schräge Rillen (13) aufweist, die seitliche Rillen (14) verbinden.

9. Luftreifen wie in irgendeinem der Ansprüche 1 bis 8 beansprucht, **dadurch gekennzeichnet, daß** er weiterhin in seitlich außerhalb von jeder der Umfangsrillen (11) liegenden Gebieten schräge Rillen (13) aufweist, die seitliche Rillen (14) verbinden, wobei die schrägen Rillen (13) weiterhin Blöcke (15) definieren, die Mikroblöcke (17) haben.

10. Luftreifen wie in Anspruch 9 beansprucht, **dadurch gekennzeichnet, daß** er weiterhin schmale Breitenbereiche (14B) der seitlichen Rillen (14) aufweist, die mit den schrägen Rillen (13) verbunden sind.

11. Luftreifen wie in irgendeinem der Ansprüche 1 bis 10 beansprucht, **dadurch gekennzeichnet, daß** die Mikroblöcke (17) zwei verschiedene regelmäßige Muster aufweisen.

## Revendications

1. Bandage pneumatique comportant une sculpture de bande de roulement composée de pavés (15) définis par des rainures circonférentielles (11, 12) et des rainures latérales (14, 16) et comportant plusieurs lamelles (3, 5) formées dans chaque pavé, chacun des pavés (15) étant divisé en une région centrale (15A) et des régions latérales (15B) dans une direction de la largeur du pavé, plusieurs micro-pavés (17) étant formés dans la région centrale (15A) du pavé par lesdites lamelles (3), la largeur (S) de la région centrale (15A) dans la direction de la largeur du pavé (15) représentant 0,20 à 0,70 fois la largeur (T) du pavé dans la direction de la largeur, la densité des lamelles dans la région centrale (15A) représentant environ 1,2 à 2,0 fois la densité des lamelles dans la région latérale (15B).

2. Bandage pneumatique selon la revendication 1, **caractérisé en ce que** les lamelles (5) agencées dans les deux régions latérales (15B) de chaque pavé (15) ont pratiquement une forme ondulée.

3. Bandage pneumatique selon les revendications 1 ou 2, **caractérisé en ce qu'**une partie d'extrémité (18) du pavé (15) faisant face à la rainure latérale (14) est pratiquement continue le long de la rainure latérale.

4. Bandage pneumatique selon l'une quelconque des revendications 1 à 3, **caractérisé en ce que** lesdites rainures latérales (14, 16) ont une largeur de rainure différente et englobent une partie à largeur réduite (14A, 16A) entre lesdites rainures circonférentielles.

5. Bandage pneumatique selon l'une quelconque des revendications 1 à 4, **caractérisé en ce que** tous lesdits pavés (15) dans ladite sculpture de bande de roulement sont divisés en des micro-pavés (17).

6. Bandage pneumatique selon l'une quelconque des revendications 1 à 5, **caractérisé en ce que** lesdits micro-pavés (17) ont une configuration géométrique régulière à répétition.

7. Bandage pneumatique selon l'une quelconque des revendications 1 à 6, **caractérisé en ce qu'**il comprend en outre des rainures inclinées (13) reliant les rainures latérales (14) dans une région de ladite sculpture de bande de roulement entre lesdites rainures circonférentielles (11).

8. Bandage pneumatique selon 1a revendication 7, **caractérisé en ce qu'**il comprend en outre des rainures inclinées (13) reliant les rainures latérales (14) dans une région de ladite sculpture de bande de roulement agencée latéralement à l'extérieur desdites rainures circonférentielles.

9. Bandage pneumatique selon l'une quelconque des revendications 1 à 8, **caractérisé en ce qu'**il comprend en outre des rainures inclinées (13) reliant les rainures latérales (14) dans des régions de ladite sculpture de bande de roulement agencées latéralement à l'extérieur de chacune desdites rainures circonférentielles (11), lesdites rainures inclinées (13) définissant en outre des pavés (14) comportant des micro-pavés (17).

10. Bandage pneumatique selon la revendication 9, **caractérisé en ce qu'**il comprend en outre des parties à largeur réduite (14B) desdites rainures latérales (14) couplées auxdites rainures inclinées (13).

11. Bandage pneumatique selon l'une quelconque des revendications 1 à 10, **caractérisé en ce que** lesdits micro-pavés (17) comprennent deux configurations régulières différentes.
